# FASCICULE DE BREVET EUROPEEN

(11) **EP 3 681 745 B1**
(45) Date de publication et mention de la délivrance du brevet: **17.01.2024**
(21) Numéro de dépôt: 18796087.7
(22) Date de dépôt: 08.10.2018
(51) Int. Cl.: B60J 5/04, B60J 5/06, B61D 19/02

(54) **VANTAIL DE PORTE POUR VÉHICULE DE TRANSPORT, SON PROCÉDÉ DE DIMENSIONNEMENT, PORTE ET VÉHICULE AINSI ÉQUIPES**
TÜRBLATT FÜR EIN TRANSPORTFAHRZEUG, VERFAHREN ZUR DIMENSIONIERUNG DAVON, TÜR UND DAMIT AUSGERÜSTETES FAHRZEUG
DOOR LEAF FOR A TRANSPORT VEHICLE, METHOD FOR DIMENSIONING SAME, DOOR AND VEHICLE FITTED THEREWITH

(30) Priorité: 16.10.2017 FR 1759674
(43) Date de publication de la demande: 22.07.2020
(73) Titulaire: Faiveley Transport Tours, 37701 Saint Pierre des Corps Cedex (FR)
(72) Inventeur: BRION, Florian, 37390 Notre Dame D'Oe (FR)
(74) Mandataire: Novagraaf Group
(86) Numéro de dépôt international: PCT/FR2018/052477
(87) Numéro de publication internationale: WO 2019/077225

(56) Documents cités:
- EP-A2- 2 274 740
- WO-A1-2015/097366
- DE-A1-102008 021 224
- JP-A- 2006 062 634

## Description

### Domaine technique de l'invention

La présente invention concerne le domaine technique des portes destinées à équiper des véhicules de transport, notamment du type train, tramway, métros ou encore trolleybus ou bus. L'invention vise plus spécifiquement de telles portes, qui sont munies d'au moins un vantail présentant des propriétés acoustiques améliorées.

### Etat de la technique

De manière habituelle, un vantail pour véhicule de transport comprend tout d'abord deux parements, destinés à être placés sur les côtés respectivement intérieur et extérieur de la caisse du véhicule. Ces parements délimitent ainsi un espace interne, qui est occupé par une âme de remplissage, réalisée essentiellement en un matériau rigide, collée sur les parements, l'ensemble formant un sandwich.

Le problème technique, visé plus spécifiquement par la présente invention, est celui de l'isolation acoustique à bord des véhicules de transport du type précité. Ce problème est de plus en plus aigu, notamment en regard des requis de confort mis en place à bord de ces véhicules. A titre d'exemple, pour des trains de grande ligne, on impose désormais d'utiliser les plateformes d'accès, aux voyageurs désirant téléphoner. Dans ces conditions on conçoit que les vantaux, équipant les portes d'accès au train, doivent présenter des propriétés significatives d'isolation acoustique.

On connait déjà des vantaux ayant une épaisseur structurelle comprise typiquement entre 25 et 50 millimètres, dont l'âme du sandwich est collée et réalisée à base de mousse rigide ou de nid d'abeille. L'utilisation de ce sandwich est un inconvénient, en termes de performance acoustique. En effet, ce type de sandwich présente un indice d'affaiblissement acoustique pondéré Rw peu satisfaisant, de l'ordre de 32 dB suivant la norme ISO 717.

Afin d'améliorer ces performances acoustiques, on a proposé d'augmenter la masse surfacique du panneau. A cet effet on ajoute, au sandwich décrit ci-dessus, par exemple des feuilles de produits bitumineux, ou alors on augmente l'épaisseur ou la masse volumique des parements. A titre de variante, on utilise une coque acoustique complète découplée de la structure. De la sorte, on peut atteindre un indice d'affaiblissement de 36 dB suivant la norme ISO 717 précitée.

Cette dernière solution présente cependant les inconvénients suivants. En effet, pour être véritablement efficace, la coque acoustique doit présenter une épaisseur de l'ordre de 20 millimètres. La présence de cette coque nécessite donc de réduire l'épaisseur de la zone structurelle du vantail, étant donné que l'épaisseur totale de celui-ci doit être invariante. Cela a pour effet d'augmenter fortement la masse de ce vantail, pour conserver le même comportement aux sollicitations mécaniques. De plus, la porte ainsi réalisée présente au voyageur une surface non structurelle. Par conséquent, cette dernière est davantage sensible aux effets de poinçonnement, dus par exemple à un coup de valise.

Par ailleurs on connait des murs anti-bruit, disposés notamment au voisinage des infrastructures routières afin de protéger les riverains, à l'égard des nuisances sonores. L'enseignement de ces murs anti-bruit ne peut pas être transposé, de manière simple, à un vantail de porte tel que visé par l'invention. En effet ces murs sont des constructions fixes, lourdes et volumineuses, dont les matériaux constitutifs et les caractéristiques mécaniques ne sont pas adaptées à un vantail équipant un véhicule mobile, se déplaçant le plus souvent à de vitesses élevées. Par ailleurs, dans le cas d'un mur anti-bruit, les bruits à atténuer sont d'origine externe alors que, dans le cas d'un vantail de véhicule, la source sonore est essentiellement générée par le déplacement proprement dit du véhicule.

Enfin on connait, de DE 10 2008 021 224, un vantail de porte comprenant deux parements respectivement extérieur et intérieur, ainsi qu'une tôle qui s'étend sur la hauteur du vantail du côté extérieur. En plusieurs endroits, cette tôle est repliée vers l'intérieur. Par ailleurs, différents blocs sont répartis sur la hauteur de ce vantail, en étant intercalés entre la tôle et le parement intérieur.

Ce document ne délivre aucun enseignement technique, en ce qui concerne l'amélioration des propriétés acoustiques du vantail. On notera tout d'abord que ce document ne mentionne pas de comparaison entre les propriétés acoustiques respectives des différents composants du vantail. Il précise que la tôle, évoquée ci-dessus, peut être réalisée en divers matériaux métalliques, notamment en aluminium. En revanche, ce document ne mentionne pas d'exemples spécifiques, quant au matériau constitutif des blocs ci-dessus. Au surplus, le rôle de cette tôle est uniquement d'ordre structurel. Il ne s'agit ni d'un élément de remplissage pour boucher d'éventuels trous, ni d'un élément isolant.

De plus, il est fait référence au document WO 2015/097366 A1, concernant un vantail de porte de véhicule de transport, dont la construction particulière du panneau intermédiaire permet de se passer des profilés et des traverses habituels du vantail de porte de véhicule de transport. Ainsi, cette structure du panneau intermédiaire crée un vantail de porte de véhicule de transport qui est relativement simple et peut être fabriqué à moindre coût.

Par ailleurs, le document EP 2 274 740 A2 décrit un panneau d'isolation acoustique destiné à isoler acoustiquement un environnement par rapport à un autre, par exemple entre un moteur et une cabine pour accueillir des passagers. La particularité du panneau d'isolation acoustique présenté concerne notamment la performance d'absorption du bruit, qui est optimisée par l'utilisation d'une structure maillée.

Compte tenu de ce qui précède, un objectif de la présente invention est de remédier, au moins partiellement, aux inconvénients de l'art antérieur évoqués ci-dessus.

Un autre objectif de l'invention est de proposer un vantail permettant d'atténuer, de façon significative, les nuisances sonores subies par les passagers du véhicule de transport équipé de ce vantail.

Un autre objectif de l'invention est de proposer un tel vantail dont le comportement mécanique est satisfaisant, en particulier en termes de rigidité globale.

Un autre objectif de l'invention est de proposer un tel vantail, dont le prix de revient est raisonnable et dont la construction peut être mise en oeuvre de façon commode.

L'objectif mentionné de la présente invention est réalisé selon l'invention par un vantail de porte pour un véhicule de transport avec les attributs de la revendication 1 et un procédé de dimensionnement d'un vantail de porte, des réalisations préférées étant l'objet des sous-revendications.

### Objets de l'invention

Selon l'invention, au moins un des objectifs ci-dessus est atteint au moyen d'un vantail (1) de porte pour un véhicule de transport, notamment pour porte de tramway, trolleybus, bus, métros ou train, comprenant :
- un parement dit intérieur (10), destiné à être placé côté intérieur de la caisse du véhicule et un parement dit extérieur (20), destiné à être placé côté extérieur de la caisse du véhicule, lesdits parements délimitant un espace interne dudit vantail,
- une âme de remplissage (30, 51 - 56) réalisée en matériau solide, ladite âme occupant l'espace interne,
- un cadre (70, 72, 74, 76) s'étendant à la périphérie de l'âme,
- des moyens de montage sur le dormant de ladite porte,

- caractérisé en ce que l'âme solide comprend
   - un corps de remplissage (30) réalisé en un premier matériau, dit matériau de remplissage rigide, le corps de remplissage (30) comprend au moins un logement borgne (41-46) permettant la réception d'un pavé acoustique respectif, ledit logement débouchant uniquement sur la face frontale intérieure (31) dudit corps (30),
   - au moins un pavé, dit pavé isolant acoustique (51 - 56), ledit pavé étant formé d'un deuxième matériau, dit matériau isolant acoustique, ledit deuxième matériau présentant des propriétés acoustiques supérieures à celles dudit matériau de remplissage,
   - chaque pavé isolant acoustique est logé dans un logement borgne correspondant du corps de remplissage s'étendant seulement sur une partie de la distance entre les parements (10, 20), du côté du parement intérieur (10).

Selon d'autres caractéristiques du vantail conforme à l'invention :
- ledit premier matériau présente un coefficient d'absorption pondéré αw inférieur à 0,1 au sens de la norme ISO 11654, alors que ledit second matériau présente un coefficient d'absorption pondéré αw compris entre 0,3 et 1.la plus grande dimension frontale de chaque pavé est inférieure à 400 millimètres, de préférence inférieure à 300 millimètres.
- la distance frontale (D51) entre les faces en regard de deux pavés adjacents est supérieure à 50 millimètres.
- la distance frontale (d51) entre la face latérale d'un pavé (41-46) et le chant dudit corps (30) est supérieure à 50 millimètres.
- le rapport (S50/S30) entre la surface frontale totale (S50) des pavés (51 - 56) et la surface frontale (S30) dudit corps (30) est compris entre 0.25 et 0.7, de préférence entre 0.4 et 0.6.
- le fond dudit logement (41-46) et le parement extérieur (20) en regard délimitent une bande (34) dudit premier matériau, ladite bande (34) présentant une épaisseur (E34) supérieure à 10 millimètres, notamment supérieure à 20 millimètres.
- le matériau isolant acoustique est une mousse à cellules ouvertes ou laine de verre, laine minérale éventuellement additionnée d'un produit bitumineux, viscoélastique ou analogue, destiné à augmenter ses propriétés.
- les dimensions frontales de chaque logement sont légèrement plus petites que les dimensions frontales (L51, I51, L55, I55) du pavé acoustique, pris au repos, afin d'assurer un maintien par compression dudit pavé dans son logement.
- la profondeur (P41) de chaque logement est égale à l'épaisseur (E51) du pavé acoustique, pris au repos, ou bien est légèrement inférieure à ladite épaisseur (E51) pour une légère compression dudit pavé entre le fond de son logement et le parement intérieur.
- le corps de remplissage (30) est fixé de manière permanente, notamment par collage, contre chaque parement.
- le cadre (70, 72, 74, 76) comprend des moyens d'étanchéité à l'air, destinés à coopérer avec le dormant de la porte de manière à éviter l'entrée d'air extérieur en direction de l'intérieur du véhicule.

L'invention a également pour objet un procédé de dimensionnement d'un vantail (1) de porte pour un véhicule de transport, notamment pour porte de tramway, trolleybus, bus, métros ou train, ce vantail comprenant
- un parement dit intérieur (10), destiné à être placé côté intérieur de la caisse du véhicule et un parement dit extérieur (20), destiné à être placé côté extérieur de la caisse du véhicule, lesdits parements délimitant un espace interne dudit vantail,
- une âme de remplissage (30, 51 - 56) réalisée en matériau solide, ladite âme occupant l'espace interne,
- un cadre (70, 72, 74, 76) s'étendant à la périphérie de l'âme,
- des moyens de montage sur le dormant de ladite porte,
- caractérisé en ce que ce procédé comprend les étapes suivantes :
- prévoir un corps de remplissage (30) réalisé en un premier matériau, dit matériau de remplissage rigide, le corps de remplissage (30) comprend au moins un logement borgne (41-46) permettant la réception d'un pavé acoustique respectif, ledit logement débouchant uniquement sur la face frontale intérieure (31) dudit corps (30),
- prévoir au moins un pavé, dit pavé isolant acoustique (51 - 56), ledit pavé étant formé d'un deuxième matériau, dit matériau isolant acoustique, ledit deuxième matériau présentant des propriétés acoustiques supérieures à celles dudit matériau de remplissage,
- prévoir une plus grande dimension frontale de chaque pavé, qui est inférieure à 400 millimètres, de préférence inférieure à 300 millimètres,
- ménager une distance frontale (D51) entre les faces en regard de deux pavés adjacents supérieure à 50 millimètres,
- ménager une distance frontale (d51) entre la face latérale d'un pavé (41-46) et le chant dudit corps (30) supérieure à 50 millimètres,
- placer chaque pavé isolant acoustique de sorte qu'il est logé dans un logement borgne correspondant du corps de remplissage s'étend seulement sur une partie de la distance entre les parements (10, 20), du côté du parement intérieur (10) et selon une épaisseur de 10 à 40 mm, et que le rapport (S50/S30) entre la surface frontale totale (S50) des pavés (51 - 56) et la surface frontale (S30) dudit corps (30) est compris entre 0.25 et 0.7, de préférence entre 0.4 et 0.6.

L'invention a également pour objet une porte pour véhicule de transport, notamment du type train, tramway, métros ou encore trolleybus ou bus, comprenant un dormant solidaire du bâti dudit véhicule, ainsi qu'au moins un vantail (1) tel que défini ci-dessus, monté mobile par rapport audit dormant.

L'invention a enfin pour objet un véhicule de transport, notamment du type train, tramway, métros ou encore trolleybus ou bus, comprenant au moins une porte telle que définie ci-dessus.

### Description des figures

L'invention va être décrite ci-après, en référence aux dessins annexés, donnés uniquement à titre d'exemples non limitatifs, dans lesquels :
La figure 1 est une vue en perspective, illustrant un vantail pour porte de véhicule, conforme à l'invention.
La figure 2 est une vue en perspective, illustrant de manière éclatée les différents éléments mécaniques du vantail de la figure 1.
La figure 3 est une vue en perspective, illustrant plus particulièrement une feuille de remplissage, appartenant à l'âme du vantail de la figure 1.
La figure 4 est une vue en perspective, illustrant plus particulièrement différents pavés acoustiques équipant le vantail de la figure 1.
Les figures 5 et 6 sont des vues en coupe, selon les lignes respectives V-V et VI-VI de la figure 1.
La figure 7 est une vue à plus grande échelle, illustrant le détail VII de la figure 5.

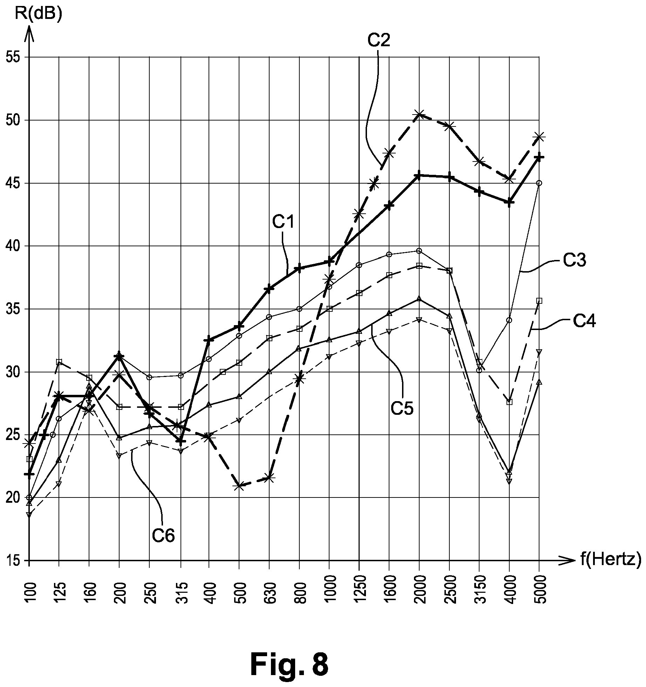

La figure 8 est un graphe, comprenant différentes courbes illustrant le comportement acoustique de panneaux de tests représentatifs des performances acoustiques de vantaux conformes à l'invention, ainsi que de différents vantaux conformes à l'art antérieur.

Les références numériques suivantes sont utilisées dans la présente description :

| | |
|---|---|
| 1 Vantail | 10,20 Parements |
| 12,22 Ouvertures de 10,20 | 14 Vitre |
| H10,H20 Hauteur de 10,20 | 110,120 Largeur de 10,20 |
| E10,E20 Epaisseur de 10,20 | |
| 30 Corps de remplissage | E30 Epaisseur de 30 |
| 31,32 Faces frontales de 30 | 33 Chant de 30 |
| 35 Découpe de 30 | H30 Hauteur de 30 |
| I30 Largeur de 30 | S30 Surface frontale de 30 |
| S35 Surface de 35 | 34 Bande de 30 |
| E34 Epaisseur de 34 | |
| 41-46 Logements | P41 Profondeur de 41 |
| 51-56 Pavés | H51 Hauteur des pavés 51-54 |
| I51 Largeur des pavés 51-54 | H55 Hauteur des pavés 55-56 |
| I55 Largeur des pavés 55-56 | D51 distance entre 2 pavés |
| d51 Distance entre 51 et le bord de 30 | S50 Surface frontale totale des pavés |
| E51 Epaisseur des pavés | |
| 70,72 Traverses | 74,76 Montants |
| 80,82,84,86 Joints | |
| C1-C6 Courbes | |

### Description détaillée

Les figures annexées illustrent un vantail conforme à l'invention, désigné dans son ensemble par la référence 1. Ce vantail forme l'ouvrant d'une porte, équipant un véhicule de transport. Cette porte comprend également un dormant de type classique, non représenté sur les figures, lequel est disposé à la périphérie d'une ouverture ménagée dans la caisse de ce véhicule. Cette porte peut être munie d'un unique vantail conforme à l'invention, ou bien d'au moins deux tels vantaux.

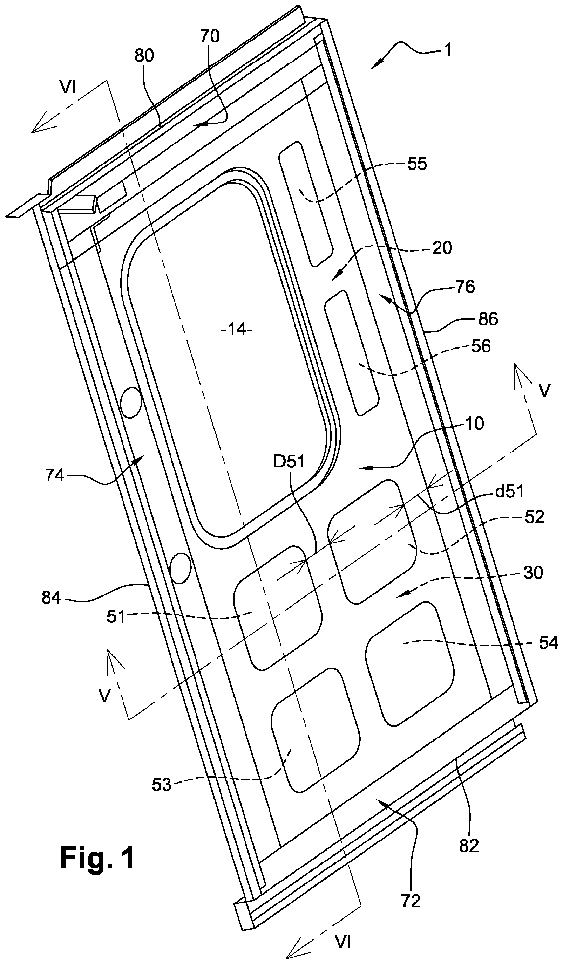

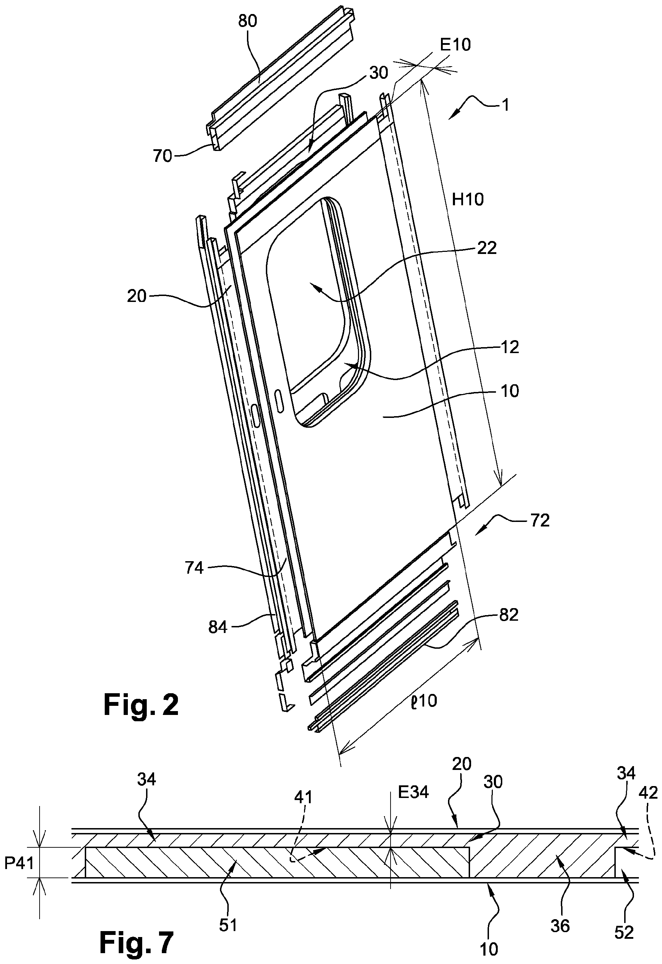

Dans l'exemple illustré, le vantail 1 équipe un véhicule de transport, du type train de banlieue. L'invention trouve cependant son application à des vantaux destinés à équiper d'autres véhicules de transport tels que notamment des tramways, des trolleybus, des bus, des métros, ou encore des trains différents de celui mentionné ci-dessus. Dans ce qui suit, on suppose que le vantail 1 est vertical, notamment en référence aux figures 1 et 2. Par ailleurs, les termes « intérieur » et « extérieur » sont utilisés en référence à la caisse du véhicule de transport équipé de ce vantail.

Le vantail 1 comprend essentiellement :
- un parement intérieur 10 ;
- un parement extérieur 20 ;
- une âme occupant l'espace interne, délimité par les deux parements 10 et 20. Dans l'exemple, cette âme est formée d'un corps de remplissage 30 rigide, dont le module de Young est typiquement supérieur à 20 kPa, ainsi que de plusieurs pavés non rigides, dits pavés acoustiques 51 à 56;
- des éléments mécaniques périphériques 70 à 76, ainsi que 80 à 86, assurant notamment des fonctions de structure, de montage et d'étanchéité.

Chaque parement 10 ou 20, de type connu en soi, est réalisé en tout matériau approprié. Il est typiquement formé par une tôle métallique, de préférence en alliage d'aluminium, en acier inoxydable ou en matériau composite, dans laquelle est ménagée une ouverture respective 12, 22 (voir figure 2) destinée à l'installation d'une vitre 14 (voir figure 1). Ces parements 10 et 20 présentent des dimensions sensiblement identiques. A titre d'exemple non limitatif :
- leur hauteur H10 ou H20 est comprise entre 1 900 et 2 500 millimètres ;
- leur largeur 110 ou I20 est comprise entre 600 et 1 200 millimètres ;
- leur épaisseur E10 ou E20 est comprise entre 25 et 50 millimètres.

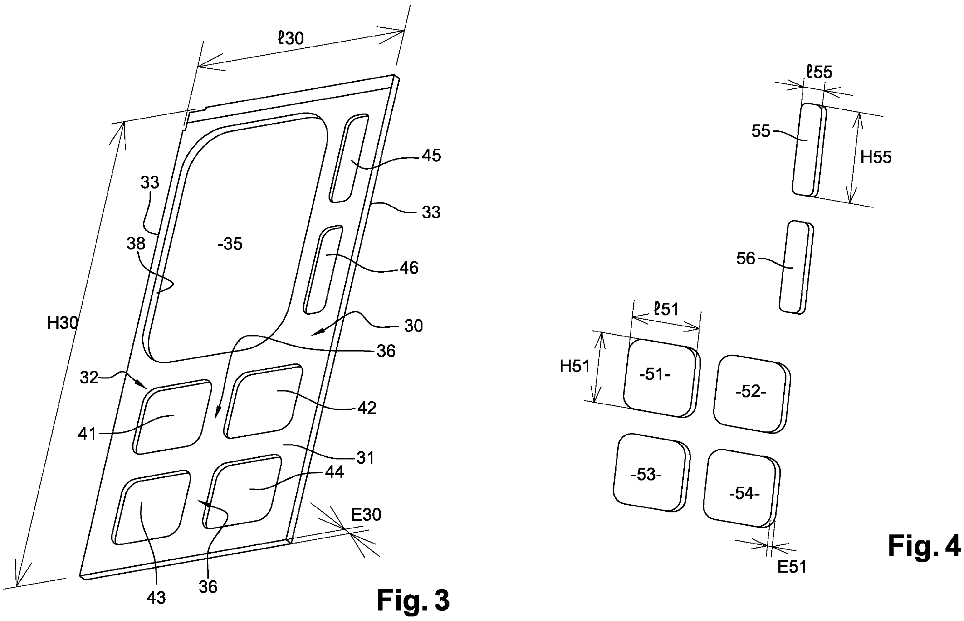

Comme montré notamment en figure 3, le corps de l'âme de remplissage est formé d'une feuille 30, par exemple réalisée par usinage. Dans l'exemple illustré, cette feuille est monobloc, à savoir formée d'un seul tenant. Cependant, à titre de variante non représentée, on peut prévoir d'utiliser plusieurs feuilles de plus petites dimensions frontales, disposées les unes à côté des autres. La feuille 30 est réalisée en un premier matériau, qui présente des caractéristiques de rigidité relativement élevées, mais en revanche des propriétés acoustiques relativement faibles. Ce premier matériau, de type classique, est entre autres une mousse de polyuréthane (PU), de polyéthylène téréphtalate (PET), ou encore de polychlorure de vinyle (PVC) ou autre mousse à cellules fermées, ou bien encore une structure en nid d'abeille.

Cette feuille 30 présente une épaisseur maximale, notée E30 (figure 3), qui correspond sensiblement à l'écartement entre les deux parements 10 et 20. A titre d'exemple, cette épaisseur est comprise entre 20 et 50 millimètres. On note 31 et 32 les deux faces frontales, respectivement intérieure et extérieure, appartenant à cette feuille, ainsi que 33 son chant périphérique.

La feuille 30 est tout d'abord creusée d'une découpe 35, qui est dite traversante dans la mesure où elle débouche sur les faces frontales opposées 31 et 32. Cette découpe permet le dégagement pour la vitre 14 précitée. Par ailleurs, cette feuille 30 comporte plusieurs renfoncements, formant des logements de réception des pavés acoustiques précités 51 à 56. Ces logements sont borgnes, dans la mesure où ils débouchent uniquement sur la face frontale intérieure 31 de la feuille 30.

Les dimensions de ces logements correspondent sensiblement à celles des pavés qui y sont reçus, lesquelles dimensions seront décrites ci-après. Dans l'exemple illustré (figure 3), on retrouve quatre logements 41 à 44 de forme à peu près carrée, prévus selon deux lignes en partie basse de la porte, à savoir au-dessous de la découpe 35. Par ailleurs, il est prévu deux logements 45 et 46 de forme allongée, placés l'un au-dessus de l'autre à côté de cette découpe.

Les logements 41 à 46 reçoivent des pavés respectifs, par exemple réalisés par usinage, qui sont plus particulièrement illustrés sur la figure 4. On retrouve quatre premiers pavés 51 à 54 sensiblement identiques, ainsi que deux autres pavés 55 et 56 sensiblement identiques. Ces pavés 51 à 56 sont réalisés en un deuxième matériau, en particulier une mousse à cellules ouvertes, une laine de verre, ou encore une laine minérale comportant des caractéristiques d'absorption. Cette mousse peut être additionnée, le cas échéant, au moyen d'un produit bitumineux ou viscoélastique, ayant des caractéristiques d'amortissement. Ce deuxième matériau, différent du premier matériau constitutif de la feuille 30, est dénommé matériau acoustique au sens de l'invention.

Ce deuxième matériau présente des propriétés acoustiques, qui sont nettement supérieures à celles du premier matériau. Cela signifie en particulier que ce deuxième matériau présente un coefficient d'absorption pondéré αw, tel que défini dans la norme ISO 11654, qui est bien supérieur à celui du premier matériau. Typiquement ce premier matériau présente un coefficient d'absorption pondéré αw inférieur à 0,1, au sens de la norme précitée ISO 11654, alors que le second matériau présente un coefficient d'absorption pondéré αw compris entre 0,3 et 1.

La feuille 30 est fixée, par ses faces frontales opposées 31 et 32, contre les parements respectifs 10 et 20. De manière préférée, cette fixation est de type permanent, notamment par collage. Chaque pavé est maintenu en position, au sein de son logement, entre le fond de ce logement et le parement intérieur.

Un cadre, en périphérie de la feuille 30, formé par deux traverses 70 et 72 et deux montants 74 et 76, est fixé sur les parements 10 et 20 (voir en particulier figures 1 et 2). Cette fixation est assurée de manière classique, notamment par collage. Ces traverses et ces montants sont tout d'abord creusés de gorges respectives, permettant la réception de joints d'étanchéité 80, 82, 84 et 86. Par ailleurs, ces traverses et ces montants portent des éléments non représentés, permettant le montage de la porte sur le bâti du véhicule, tels des galets et/ou rails et/ou doigts. Les différents moyens mécaniques, auxquels il est fait référence dans le présent paragraphe, sont de type classique de sorte qu'ils ne sont pas décrits plus en détail dans ce qui suit.

On notera que l'invention vise tout particulièrement des véhicules équipés de moyens d'étanchéité à l'air, notamment tels que décrits au paragraphe précédent pour la porte. En effet, en l'absence de tels moyens, l'isolation phonique du véhicule est très fortement pénalisée.

On va maintenant donner, à titre non limitatif, les dimensions frontales de la feuille et des pavés, en référence notamment aux figures 3 et 4. Ces valeurs sont données au repos, à savoir en l'absence de contraintes mécaniques exercées sur ces éléments :
- Hauteur H30 et largeur I30 (figure 3) de la feuille : voisines de celles des parements.
- hauteur H51 (figure 4) des premiers pavés 51 à 54 : entre 100 et 400 millimètres, notamment entre 200 et 300 millimètres
- largeur I51 (figure 4) des premiers pavés 51 à 54 : entre 100 et 400 millimètres, notamment entre 200 et 300 millimètres
- hauteur H55 (figure 4) des seconds pavés 55 et 56 : entre 100 et 400 millimètres, notamment entre 200 et 300 millimètres
- largeur I55 (figure 4) des seconds pavés 55 et 56 : entre 50 et 200 millimètres, notamment entre 100 et 150 millimètres.

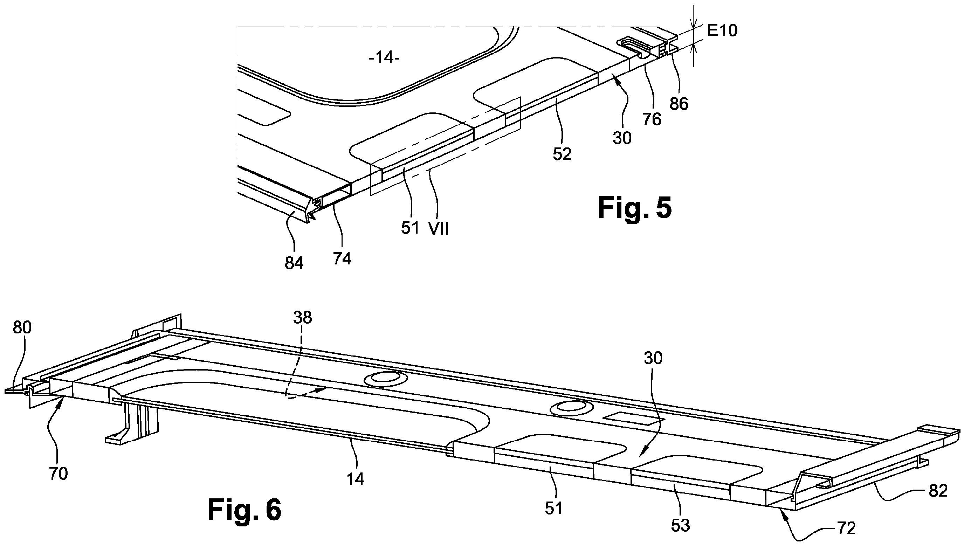

Dans l'exemple illustré, on a décrit des pavés acoustiques de forme rectangulaire. On conçoit que, pour chaque type de vantail, les dimensions et la forme des logements et des pavés peuvent varier, sans pour autant sortir du cadre de la présente invention. Dans ces conditions, les valeurs numériques du paragraphe précédent sont spécifiques aux pavés et aux logements, décrits sur les figures 1 à 7.

Dans ce qui suit, on va maintenant expliquer un procédé de dimensionnement d'un vantail conforme à l'invention, en faisant référence aux dimensions du vantail décrit sur les figures 1 à 7. Ce procédé de dimensionnement trouve son application à tout type de vantail, tel que visé par l'invention. En d'autres termes, les valeurs numériques présentées dans les paragraphes suivants ne sont pas spécifiques aux pavés et aux logements, décrits sur les figures 1 à 7.
1/ De manière générale, on préfère tout d'abord que la plus grande dimension frontale de chaque pavé soit inférieure à 400 millimètres, de préférence inférieure à 300 millimètres. Cela permet d'éviter que l'âme et le parement intérieur ne soient trop souples, dans les zones occupées par les pavés. De la sorte on limite les déformations du vantail, qui seraient liées aux efforts de flexion appliqués sur le vantail ou aux impacts provoqués par les passagers ou leurs bagages.
2/ En référence à la figure 1, on note D51 la distance entre les faces latérales en regard de deux pavés adjacents, et d51 la distance entre la face latérale d'un pavé et le chant de la feuille. De manière générale, on préfère également que chacune de ces deux distances D51 et d51 soit supérieure à 50 mm, tout en étant inférieure à 100 mm. Prévoir une distance supérieure à 50 mm permet de conserver des régions, appartenant à la feuille 30, dont la largeur est supérieure à cette valeur numérique ci-dessus. Dans ces conditions, on garantit un collage satisfaisant de cette feuille 30 contre les parements, en s'affranchissant de tout risque significatif d'arrachement.
3/ En référence à la figure 3, on note S30 la surface frontale de la feuille 30, laquelle tient compte des logements 41 à 46, mais pas de la découpe 35. En d'autres termes, S30 = H30 * I30 - S35, où S35 est la surface de cette découpe. Par ailleurs, on note S50 la surface frontale totale des pavés 51 à 56, laquelle est égale à la somme des surfaces frontales S51 à S56. Pour chaque pavé, cette surface S51 à S56 est égale au produit de sa longueur L51 à L56, par sa largeur I51 à I56. De manière générale, on préfère que le rapport S50/S30 soit compris entre 0.25 et 0.7, de préférence entre 0.4 et 0.6. Cela permet de conférer une atténuation acoustique satisfaisante, tout en préservant la tenue mécanique globale.

Le procédé de dimensionnement d'un vantail, conforme à l'invention, fait avantageusement intervenir les valeurs numériques présentées aux points 1/ à 3/ ci-dessus. En tenant compte de ces valeurs numériques, l'homme du métier est à même de disposer un nombre approprié de pavés, dans des logements respectifs ménagés dans le corps. De manière typique, ce nombre de pavés acoustiques est compris entre 4 et 10.

Comme le montre la figure 7, étant donné que les pavés ne s'étendent pas sur toute l'épaisseur de la feuille 30, on conserve une bande 34 (voir figure 7) du premier matériau, dont l'épaisseur est notée E34. De manière générale, on préfère que cette dimension E34 soit supérieure à 10 millimètres, notamment à 20 millimètres. Cela permet de préserver une rigidité satisfaisante de la feuille et, de ce fait, de l'ensemble du vantail.

De manière générale l'épaisseur E51 (figure 4) des pavés, donnée au repos, est avantageusement comprise entre 10 et 40 millimètres. On notera que les différents pavés 51 à 56 présentent une épaisseur similaire, même si leurs formes frontales sont différentes. Cette gamme d'épaisseur permet d'assurer une qualité d'absorption acoustique significative, sans réduire de manière intempestive la rigidité globale de l'âme. De manière générale les différents logements 41 à 46 possèdent une même profondeur, notée P41 (figure 7). Cette profondeur P41 peut être sensiblement identique à celle E51, ou bien être légèrement inférieure à E51, afin d'exercer une légère compression sur les pavés entre le fond des logements et le parement intérieur.

De manière générale, la largeur et la hauteur de chacun des logements 41 à 46 sont voisines de celles du pavé qui y est inséré. On peut prévoir avantageusement un logement légèrement plus petit pour un maintien par compression du pavé dans son logement

La figure 9 regroupe différentes courbes C1 à C6, illustrant les comportements acoustiques de différents panneaux, dits panneaux de test. Ces panneaux sont susceptibles d'être intégrés chacun à différents vantaux, dont le premier vantail est conforme à l'invention et dont les autres vantaux illustrent différentes réalisations de l'état de la technique. Ces courbes C1 à C6, relatives aux panneaux de test tels que présentés ci-dessus, sont représentatives des performances acoustiques des différents vantaux, équipés de ces panneaux. Sur ces courbes on a porté, en ordonnées, la valeur en décibels de l'indice d'affaiblissement acoustique R suivant la norme ISO 717 et, en abscisses, la fréquence f en hertz.

La courbe C1, comprenant une succession de points expérimentaux matérialisés par des signes « + », a été obtenue lors de l'utilisation d'un panneau de test destiné à équiper un vantail de porte conforme à l'invention, tel que celui décrit sur les figures 1 à 7. Les caractéristiques de ce panneau sont les suivantes :
- masse surfacique globale de 18 kg/m² ;
- indice d'affaiblissement pondéré Rw, tel que défini dans la norme ISO 717, égal à 38,2 dB ;
- parements 10 et 20 tous deux réalisés en aluminium, présentant une hauteur de 1 mètre, une largeur de 1 mètre et une épaisseur de 1,5 millimètre ;
- feuille de remplissage 30 réalisée en une mousse de polyuréthane (PU), présentant une épaisseur de 46,6 millimètres, comprenant :
   ✔ 9 logements présentant une hauteur de 325 millimètres, une largeur de 325 millimètres et une épaisseur de 25 millimètres ;
   ✔ 9 pavés acoustiques, réalisés en mousse absorbante dont les dimensions correspondent à celles des logements ;
- un cadre périphérique en aluminium d'une largeur de 30 millimètres.

La courbe C2, comprenant une succession de points expérimentaux matérialisés par des signes « * », a été obtenue lors de l'utilisation d'un panneau de test destiné à équiper un premier vantail de porte conforme à l'art antérieur et utilisant le principe d'une coque acoustique, dont les caractéristiques sont les suivantes :
- masse surfacique globale de 18,5 kg/m²
- indice d'affaiblissement pondéré Rw, tel que défini dans la norme ISO 717, égal à 31,2 dB ;
- 3 parements tous réalisés en aluminium, présentant une hauteur de 1 mètre, une largeur de 1 mètre et une épaisseur de 1 millimètre ;
- feuille de remplissage 30 réalisée en une mousse de polyuréthane (PU), présentant une épaisseur de 20,6 millimètres ;
- âme de remplissage de la coque acoustique en mousse absorbante, présentant une épaisseur de 25 millimètres ;
- un cadre périphérique en aluminium d'une largeur de 30 millimètres.

La courbe C3, comprenant une succession de points expérimentaux matérialisés par des cercles, a été obtenue lors de l'utilisation d'un panneau de test destiné à équiper un deuxième vantail de porte conforme à l'art antérieur, dont les caractéristiques sont les suivantes :
- masse surfacique globale de 22,2 kg/m² ;
- indice d'affaiblissement pondéré Rw, tel que défini dans la norme ISO 717, égal à 36 dB
- parements réalisés en aluminium, présentant une hauteur de 1 mètre, une largeur de 1 mètre et une épaisseur de 1,5 millimètre ;
- âme de remplissage réalisée en une mousse de polyuréthane (PU), présentant une épaisseur de 41,6 millimètres ;
- couche de masse lourde en produit bitumineux d'une épaisseur de 5 millimètres ;
- un cadre périphérique en aluminium d'une largeur de 30 millimètres.

La courbe C4, comprenant une succession de points expérimentaux matérialisés par des carrés, a été obtenue lors de l'utilisation d'un panneau de test destiné à équiper un troisième vantail de porte conforme à l'art antérieur, dont les caractéristiques sont les suivantes :
- masse surfacique globale de 17,5 kg/m² ;
- indice d'affaiblissement pondéré Rw, tel que défini dans la norme ISO 717, égal à 34,5 dB ;
- parements réalisés en aluminium, présentant une hauteur de 1 mètre, une largeur de 1 mètre et une épaisseur de 1,5 millimètre ;
- âme de remplissage réalisée en une mousse de polyuréthane (PU), présentant une épaisseur de 44,1 millimètres ;
- couche de masse lourde en produit bitumineux d'une épaisseur de 2,5 millimètres ;
- un cadre périphérique en aluminium d'une largeur de 30 millimètres.

La courbe C5, comprenant une succession de points expérimentaux matérialisés par des triangles à pointe vers le haut, a été obtenue lors de l'utilisation d'un panneau de test destiné à équiper un quatrième vantail de porte conforme à l'art antérieur, dont les caractéristiques sont les suivantes :
- masse surfacique globale de 14,1 kg/m² ;
- indice d'affaiblissement pondéré Rw, tel que défini dans la norme ISO 717, égal à 31,9dB ;
- parement extérieur réalisé en aluminium, présentant une hauteur de 1 mètre, une largeur de 1 mètre et une épaisseur de 2 millimètres ;
- parement intérieur réalisé en aluminium, présentant une hauteur de 1 mètre, une largeur de 1 mètre et une épaisseur de 1,5 millimètre ;
- âme de remplissage réalisée en une mousse de polyuréthane (PU), présentant une épaisseur de 46,6 millimètres ;
- un cadre périphérique en aluminium d'une largeur de 30 millimètres.

La courbe C6, comprenant une succession de points expérimentaux matérialisés par des triangles à pointe vers le bas, a été obtenue lors de l'utilisation d'un panneau de test destiné à équiper un cinquième vantail de porte conforme à l'art antérieur, dont les caractéristiques sont les suivantes :
- masse surfacique globale de 12,8 kg/m² ;
- Indice d'affaiblissement pondéré Rw, tel que défini dans la norme ISO 717, égal à 30,3 dB ;
- parements réalisés en aluminium, présentant une hauteur de 1 mètre, une largeur de 1 mètre et une épaisseur de 1,5 millimètre ;
- âme de remplissage réalisée en une mousse de polyuréthane (PU), présentant une épaisseur de 46,6 millimètres ;
- un cadre périphérique en aluminium d'une largeur de 30 millimètres.

L'utilisation de pavés acoustiques, conformes à l'invention, apporte plusieurs avantages vis-à-vis des vantaux de l'art antérieur. Ces avantages sont notables, aussi bien en présence des vantaux antérieurs équipés d'une coque acoustique complète (courbe C2), qu'en présence de ceux dépourvus de matériau à propriété acoustique (courbes C3 à C6).

On note tout d'abord que, sur la courbe C1 relative au vantail de l'invention, la pente de la courbe de l'indice d'affaiblissement est plus forte que sans élément acoustique (courbes C3 à C6) dans la gamme de fréquence 400-2000 Hz.

Par rapport à une coque acoustique complète (courbe C2), qui présente une pente encore plus forte dans la bande de fréquence 400-2000 Hz, les pavés acoustiques utilisés dans l'invention ne génèrent pas de creux d'absorption aussi important autour de la fréquence 400 Hz. Cela permet de bénéficier d'un meilleur indice d'affaiblissement global et d'une meilleure performance globale en exploitation, puisque les émissions acoustiques sont importantes dans cette gamme de fréquence.

La chute de l'indice d'affaiblissement autour des fréquences 3000-4000 Hz est gommée par l'effet des pavés acoustiques, conformément à l'invention.

L'analyse des courbes C3 à C6 illustre que, lorsque la masse surfacique augmente, la valeur de l'indice d'affaiblissement pondéré Rw augmente également.

On notera en outre que le vantail conforme à l'invention présente des résultats acoustiques satisfaisants, sans pour autant subir un alourdissement intempestif. Ainsi un vantail de l'invention, dont l'indice d'affaiblissement acoustique est de 38 dB, présente une masse surfacique de 18 kg/m². Par comparaison, un vantail de l'art antérieur de masse surfacique identique possède des performances acoustiques nettement inférieures, puisqu'il présente un indice de 34.5 dB.

Le fait de prévoir les pavés acoustiques tournés vers l'intérieur du véhicule, c'est-à-dire du côté du parement intérieur, présente des avantages spécifiques. Cela permet tout d'abord de préserver une structure rigide du côté extérieur du vantail et, par conséquent, de conserver une bonne résistance au gravillonnage. A cet égard, la structure rigide limite fortement la possibilité de déformation du parement extérieur sous l'effet des chocs dus à d'éventuels projectiles, tels que des cailloux ou de morceaux de glace.

Par ailleurs, sous l'effet des ondes de pression, notamment lors du croisement entre véhicules ou de l'entrée en tunnel, le vantail est sollicité de façon importante et subit des pressions différentielles entre son parement intérieur et son parement extérieur. Chaque pavé acoustique est isolé de l'extérieur en raison de la présence de matériaux quasiment étanches à l'air, de sorte que la pression de l'air à l'intérieur de ce pavé est quasiment identique à celle de l'intérieur du train. La pression à l'intérieur du véhicule ne varie qu'avec retard et lentement lorsque le train présente une étanchéité à l'air, ce qui est le cas sur les véhicules modernes pour lesquels une bonne isolation acoustique est requise. Ainsi, aucune pression différentielle significative n'est exercée sur le parement en regard des pavés.

De manière générale les vantaux sont conçus de telle sorte que la flexion, intervenant sous l'effet des ondes de pression ou des poussées exercées par les voyageurs, soit limitée.

Pour cela la présence d'une structure rigide entre les deux parements, comme prévu dans l'état de la technique, permet de réduire la flexion du vantail. En effet, la mousse rigide utilisée dans cette structure permet de maintenir une distance constante entre les deux parements.

Dans l'agencement du vantail conforme à l'invention, la présence des pavés en matériau acoustique ne réduit pas de manière intempestive la résistance globale du vantail vis-à-vis des contraintes mécaniques. De manière avantageuse, comme montré sur les figures 3 et 7, deux bandes minces 34 adjacentes de la feuille 30 sont reliées par un pont de matière 36, s'étendant entre les deux parements 10 et 20. Chaque pont 36 définit un profilé en forme de I, dont la fonction est d'augmenter la surface de collage résiduelle, tout en conservant une surface de matériau acoustique la plus grande possible. Ce profilé en forme de I peut être réalisé en une matière plastique, métallique, composite ou en matériaux expansés ou alvéolaires permettant de conserver des propriétés acoustiques.

## Revendications

1. Vantail (1) de porte pour un véhicule de transport comprenant:
un parement dit intérieur (10), destiné à être placé côté intérieur de la caisse du véhicule et un parement dit extérieur (20), destiné à être placé côté extérieur de la caisse du véhicule, lesdits parements délimitant un espace interne dudit vantail, une âme de remplissage (30, 51 - 56) réalisée en matériau solide, ladite âme occupant l'espace interne,
- un cadre (70, 72, 74, 76) s'étendant à la périphérie de l'âme,
- des moyens de montage sur le dormant de ladite porte,
- au moins un pavé, dit pavé isolant acoustique (51 - 56), ledit pavé étant formé d'un deuxième matériau, dit matériau isolant acoustique, ledit deuxième matériau présentant des propriétés acoustiques supérieures à celles dudit matériau de remplissage, **caractérisé en ce que** l'âme solide comprend un corps de remplissage (30) réalisé en un premier matériau, dit matériau de remplissage rigide étant une mousse à cellules fermées, le corps de remplissage (30) comprend au moins un logement borgne (41 -46) permettant la réception d'un pavé acoustique respectif, ledit logement débouchant uniquement sur la face frontale intérieure (31) dudit corps (30),
- chaque pavé isolant acoustique est logé dans un logement borgne correspondant du corps de remplissage s'étendant seulement sur une partie de la distance entre les parements (10, 20), du côté du parement intérieur (10).

2. Vantail selon la revendication 1, **caractérisé en ce que** ledit premier matériau présente un coefficient d'absorption pondéré aw inférieur à 0,1 au sens de la norme ISO 1 1654, alors que ledit second matériau présente un coefficient d'absorption pondéré aw compris entre 0,3 et 1 .

3. Vantail selon l'une des revendications précédentes, **caractérisé en ce que** la plus grande dimension frontale de chaque pavé est inférieure à 400 millimètres, de préférence inférieure à 300 millimètres.

4. Vantail selon l'une des revendications précédentes, **caractérisé en ce que** la distance frontale (D51) entre les faces en regard de deux pavés adjacents est supérieure à 50 millimètres.

5. Vantail selon l'une des revendications précédentes, **caractérisé en ce que** la distance frontale (d51) entre la face latérale d'un pavé (41 -46) et le chant dudit corps (30) est supérieure à 50 millimètres.

6. Vantail selon l'une des revendications précédentes, **caractérisé en ce que** le rapport (S50/S30) entre la surface frontale totale (S50) des pavés (51 - 56) et la surface frontale (S30) dudit corps (30) est compris entre 0.25 et 0.7, de préférence entre 0.4 et 0.6.

7. Vantail selon la revendication 1, **caractérisé en ce que** le fond dudit logement (41 -46) et le parement extérieur (20) en regard délimitent une bande (34) dudit premier matériau, ladite bande (34) présentant une épaisseur (E34) supérieure à 10 millimètres, notamment supérieure à 20 millimètres.

8. Vantail selon l'une des revendications précédentes, **caractérisé en ce que** le matériau isolant acoustique est une mousse à cellules ouvertes ou laine de verre, laine minérale éventuellement additionnée d'un produit bitumineux, viscoélastique ou analogue, destiné à augmenter ses propriétés.

9. Vantail selon la revendication 1, **caractérisé en ce que** les dimensions frontales de chaque logement sont légèrement plus petites que les dimensions frontales (L51, 151, L55, 155) du pavé acoustique, pris au repos, afin d'assurer un maintien par compression dudit pavé dans son logement.

10. Vantail selon la revendication 1, **caractérisé en ce que** la profondeur (P41) de chaque logement est égale à l'épaisseur (E51) du pavé acoustique, pris au repos, ou bien est légèrement inférieure à ladite épaisseur (E51) pour une légère compression dudit pavé entre le fond de son logement et le parement intérieur.

11. Vantail selon l'une des revendications précédentes, **caractérisé en ce que** le corps de remplissage (30) est fixé de manière permanente, notamment par collage, contre chaque parement.

12. Procédé de dimensionnement d'un vantail (1) de porte pour un véhicule de transport, notamment pour porte de tramway, trolleybus, bus, métros ou train, ce vantail comprenant :
- un parement dit intérieur (10), destiné à être placé côté intérieur de la caisse du véhicule et un parement dit extérieur (20), destiné à être placé côté extérieur de la caisse du véhicule, lesdits parements délimitant un espace interne dudit vantail, une âme de remplissage (30, 51 - 56) réalisée en matériau solide, ladite âme occupant l'espace interne,
- un cadre (70, 72, 74, 76) s'étendant à la périphérie de l'âme,
- des moyens de montage sur le dormant de ladite porte,
**caractérisé en ce que** ce procédé comprend les étapes suivantes :
prévoir un corps de remplissage (30) réalisé en un premier matériau, dit matériau de remplissage rigide étant une mousse à cellules fermées, le corps de remplissage (30) comprend au moins un logement borgne (41 -46) permettant la réception d'un pavé acoustique respectif, ledit logement débouchant uniquement sur la face frontale intérieure (31) dudit corps (30),
- prévoir au moins un pavé, dit pavé isolant acoustique (51 - 56), ledit pavé étant formé d'un deuxième matériau, dit matériau isolant acoustique, ledit deuxième matériau présentant des propriétés acoustiques supérieures à celles dudit matériau de remplissage,
prévoir une plus grande dimension frontale de chaque pavé, qui est inférieure à 400 millimètres, de préférence inférieure à 300 millimètres,
ménager une distance frontale (D51) entre les faces en regard de deux pavés adjacents supérieure à 50 millimètres,
ménager une distance frontale (d51) entre la face latérale d'un pavé (41 - 46) et le chant dudit corps (30) supérieure à 50 millimètres,
- placer chaque pavé isolant acoustique de sorte qu'il est logé dans un logement borgne correspondant du corps de remplissage s'étend seulement sur une partie de la distance entre les parements (10, 20), du côté du parement intérieur (10) et selon une épaisseur de 10 à 40 mm, et que le rapport (S50/S30) entre la surface frontale totale (S50) des pavés (51 - 56) et la surface frontale (S30) dudit corps (30) est compris entre 0.25 et 0.7, de préférence entre 0.4 et 0.6.

13. Porte pour véhicule de transport, notamment du type train, tramway, métros ou encore trolleybus ou bus, comprenant un dormant solidaire du bâti dudit véhicule, ainsi qu'au moins un vantail (1) conforme à l'une quelconque des revendications 1 à 11, monté mobile par rapport audit dormant.

14. Véhicule de transport, notamment du type train, tramway, métros ou encore trolleybus ou bus, comprenant au moins une porte conforme à la revendication précédente.

## Patentansprüche

1. Türflügel (1) für ein Transportfahrzeug, umfassend:
eine sogenannte Innenverkleidung (10), die dafür bestimmt ist, auf einer Innenseite der Karosserie des Fahrzeugs platziert zu werden, und eine sogenannte Außenverkleidung (20), die dafür bestimmt ist, auf einer Außenseite der Karosserie des Fahrzeugs platziert zu werden, wobei die Verkleidungen einen inneren Raum des Flügels begrenzen, einen Füllkern (30, 51 - 56), der aus festem Material ausgeführt ist, wobei der Kern den inneren Raum einnimmt,
- einen Rahmen (70, 72, 74, 76), der sich an dem Umfang des Kerns erstreckt,
- Mittel zum Montieren an der Zarge der Tür,
- mindestens einen Block, Schalldämmungsblock (51 - 56) genannt, wobei der Block aus einem zweiten Material ausgebildet ist, Schalldämmungsmaterial genannt, wobei das zweite Material bessere Schalleigenschaften als die des Füllmaterials aufweist, **dadurch gekennzeichnet, dass** der feste Kern einen Füllkörper (30) umfasst, der aus einem ersten Material ausgeführt ist, starres Füllmaterial genannt, das ein geschlossenzelliger Schaumstoff ist, wobei der Füllkörper (30) mindestens eine Blindaufnahme (41 - 46) umfasst, die den Empfang eines jeweiligen Schallblocks ermöglicht, wobei die Aufnahme nur auf der Innenvorderfläche (31) des Körpers (30) mündet,
- wobei jeder Schalldämmungsblock in einer entsprechenden Blindaufnahme des Füllkörpers, die sich einzig auf einem Teil des Abstands zwischen den Verkleidungen (10, 20) erstreckt, auf der Seite der Innenverkleidung (10) aufgenommen ist.

2. Flügel nach Anspruch 1, **dadurch gekennzeichnet, dass** das erste Material einen gewichteten Absorptionskoeffizienten aw kleiner als 0,1 gemäß ISO 1 1654 aufweist, während das zweite Material einen gewichteten Absorptionskoeffizienten aw zwischen 0,3 und 1 aufweist.

3. Flügel nach einem der vorstehenden Ansprüche,
**dadurch gekennzeichnet, dass** die größte Vorderabmessung jedes Blocks kleiner als 400 Millimeter, vorzugsweise kleiner als 300 Millimeter ist.

4. Flügel nach einem der vorstehenden Ansprüche,
**dadurch gekennzeichnet, dass** der Vorderabstand (D51) zwischen den Flächen gegenüber von zwei angrenzenden Blöcken größer als 50 Millimeter ist.

5. Flügel nach einem der vorstehenden Ansprüche,
**dadurch gekennzeichnet, dass** der Vorderabstand (d51) zwischen der lateralen Fläche eines Blocks (41 - 46) und der Kante des Körpers (30) größer als 50 Millimeter ist.

6. Flügel nach einem der vorstehenden Ansprüche,
**dadurch gekennzeichnet, dass** das Verhältnis (S50/S30) zwischen der gesamten Vorderoberfläche (S50) der Blöcke (51 - 56) und der Vorderoberfläche (S30) des Körpers (30) zwischen 0,25 und 0,7, vorzugsweise zwischen 0,4 und 0,6 ist.

7. Flügel nach Anspruch 1, **dadurch gekennzeichnet, dass** der Boden der Aufnahme (41 - 46) und die Außenverkleidung (20) gegenüber einen Streifen (34) des ersten Materials begrenzen, wobei der Streifen (34) eine Dicke (E34) aufweist, die größer als 10 Millimeter, insbesondere größer als 20 Millimeter ist.

8. Flügel nach einem der vorstehenden Ansprüche,
**dadurch gekennzeichnet, dass** das Schalldämmungsmaterial ein offenzelliger Schaumstoff oder Glaswolle ist, wobei Mineralwolle optional mit einem bituminösen, viskoelastischen oder analogen Produkt versetzt ist, das dafür bestimmt ist, ihre Eigenschaften zu verstärken.

9. Flügel nach Anspruch 1, **dadurch gekennzeichnet, dass** die Vorderabmessungen jeder Aufnahme leicht kleiner als die Vorderabmessungen (L51, 151, L55, 155) des Schallblocks sind, im Ruhezustand genommen, um ein Halten durch Kompression des Blocks in seiner Aufnahme zu gewährleisten.

10. Flügel nach Anspruch 1, **dadurch gekennzeichnet, dass** die Tiefe (P41) jeder Aufnahme gleich der Dicke (E51) des Schallblocks, im Ruhezustand genommen, beziehungsweise leicht kleiner als die Dicke (E51) für eine leichte Kompression des Blocks zwischen dem Boden seiner Aufnahme und der Innenverkleidung ist.

11. Flügel nach einem der vorstehenden Ansprüche,
**dadurch gekennzeichnet, dass** der Füllkörper (30) auf permanente Weise, insbesondere durch Kleben, an jeder Verkleidung befestigt ist.

12. Verfahren zum Bemessen eines Türflügels (1) für ein Transportfahrzeug, insbesondere für eine Tür einer Straßenbahn, eines Oberleitungsbusses, eines Busses, von U-Bahnen oder eines Zugs, dieser Flügel umfassend:
- eine sogenannte Innenverkleidung (10), die dafür bestimmt ist, auf der Innenseite der Karosserie des Fahrzeugs platziert zu werden, und eine Außenverkleidung (20), die dafür bestimmt ist, auf der Außenseite der Karosserie des Fahrzeugs platziert zu werden, wobei die Verkleidungen einen inneren Raum des Flügels begrenzen, einen Füllkern (30, 51 - 56), der aus festem Material ausgeführt ist, wobei der Kern den inneren Raum einnimmt,
- einen Rahmen (70, 72, 74, 76), der sich an dem Umfang des Kerns erstreckt,
- Mittel zum Montieren an der Zarge der Tür,
**dadurch gekennzeichnet, dass** dieses Verfahren die folgenden Schritte umfasst:
Bereitstellen eines Füllkörpers (30), der aus einem ersten Material ausgeführt ist, starres Füllmaterial genannt, das ein geschlossenzelliger Schaum ist, wobei der Füllkörper (30) mindestens eine Blindaufnahme (41 - 46) umfasst, die den Empfang eines jeweiligen Schallblocks ermöglicht, wobei die Aufnahme nur auf der Innenvorderfläche (31) des Körpers (30) mündet,
- Bereitstellen mindestens eines Blocks, Schalldämmungsblock (51 - 56) genannt, wobei der Block aus einem zweiten Material ausgebildet ist, Schalldämmungsmaterial genannt, wobei das zweite Material Schalleigenschaften aufweist, die besser als die des Füllmaterials sind,
Bereitstellen einer größeren Vorderabmessung jedes Blocks, die kleiner als 400 Millimeter, vorzugsweise kleiner als 300 Millimeter ist,
Anordnen eines Vorderabstands (D51) zwischen den Flächen gegenüber von zwei angrenzenden Blöcken, der größer als 50 Millimeter ist,
Anordnen eines Vorderabstands (d51) zwischen der lateralen Fläche eines Blocks (41 - 46) und der Kante des Körpers (30), der größer als 50 Millimeter ist,
- Platzieren jedes Schalldämmungsblocks so, dass er in einer entsprechenden Blindaufnahme des Füllkörpers aufgenommen ist, die sich einzig auf einem Teil des Abstands zwischen den Verkleidungen (10, 20) erstreckt, auf der Seite der Innenverkleidung (10) und in einer Dicke von 10 bis 40 mm, und dass das Verhältnis (S50/S30) zwischen der gesamten Vorderoberfläche (S50) der Blöcke (51 - 56) und der Vorderoberfläche (S30) des Körpers (30) zwischen 0,25 und 0,7, vorzugsweise zwischen 0,4 und 0,6 ist.

13. Tür für ein Transportfahrzeug, insbesondere der Art Zug, Straßenbahn, U-Bahnen oder auch Oberleitungsbus oder Bus, umfassend eine Zarge, die mit dem Gestell des Fahrzeugs fest verbunden ist, sowie mindestens einen Flügel (1) nach einem der Ansprüche 1 bis 11, der in Bezug auf die Zarge bewegbar montiert ist.

14. Transportfahrzeug, insbesondere der Art Zug, Straßenbahn, U-Bahnen oder auch Oberleitungsbus oder Bus, umfassend mindestens eine Tür nach dem vorstehenden Anspruch.

## Claims

1. Door leaf (1) for a transport vehicle, comprising:
a so-called inner cladding (10), intended to be placed on the inside of the vehicle body, and a so-called outer cladding (20), intended to be placed on the outside of the vehicle body, said claddings delimiting an internal space of said leaf, and a filling core (30, 51 - 56) made of solid material, said core occupying the internal space,
- a frame (70, 72, 74, 76) extending at the periphery of the core,
- means for mounting on the door frame of said door,
- at least one block, referred to as an acoustic insulating block (51 - 56), said block being formed from a second material, referred to as acoustic insulating material, said second material having acoustic properties greater than those of said filling material, **characterized in that** the solid core comprises a filling body (30) made of a first material, referred to as rigid filling material, which is a closed-cell foam, the filling body (30) comprises at least one blind cavity (41
- 46) allowing the reception of a respective acoustic block, said cavity opening only onto the inner front face (31) of said body (30),
- each acoustic insulating block is accommodated in a corresponding blind cavity of the filling body and extends only over a part of the distance between the claddings (10, 20), on the side of the inner cladding (10).

2. Leaf according to claim 1, **characterized in that** said first material has a weighted absorption coefficient aw of less than 0.1 within the meaning of the ISO 1 1654 standard, while said second material has a weighted absorption coefficient aw of between 0.3 and 1.

3. Leaf according to either of the preceding claims, **characterized in that** the largest frontal dimension of each block is less than 400 millimeters, preferably less than 300 millimeters.

4. Leaf according to any of the preceding claims, **characterized in that** the frontal distance (D51) between the opposing faces of two adjacent blocks is greater than 50 millimeters.

5. Leaf according to any of the preceding claims, **characterized in that** the frontal distance (d51) between the lateral face of a block (41 - 46) and the edge of said body (30) is greater than 50 millimeters.

6. Leaf according to any of the preceding claims, **characterized in that** the ratio (S50/S30) between the total front surface (S50) of the blocks (51 - 56) and the front surface (S30) of said body (30) is between 0.25 and 0.7, preferably between 0.4 and 0.6.

7. Leaf according to claim 1, **characterized in that** the bottom of said cavity (41 - 46) and the opposite outer cladding (20) delimit a strip (34) of said first material, said strip (34) having a thickness (E34) greater than 10 millimeters, in particular greater than 20 millimeters.

8. Leaf according to any of the preceding claims, **characterized in that** the acoustic insulating material is an open-cell foam or glass wool or mineral wool optionally with the addition of a bituminous, viscoelastic or similar product intended to enhance its properties.

9. Leaf according to claim 1, **characterized in that** the frontal dimensions of each cavity are slightly smaller than the frontal dimensions (L51, 151, L55, 155) of the acoustic block, taken at rest, in order to ensure that said block is held in compression in its cavity.

10. Leaf according to claim 1, **characterized in that** the depth (P41) of each cavity is equal to the thickness (E51) of the acoustic block, taken at rest, or else is slightly less than said thickness (E51) for slight compression of said block between the bottom of its cavity and the inner cladding.

11. Leaf according to any of the preceding claims, **characterized in that** the filling body (30) is permanently secured, in particular by gluing, against each cladding.

12. Method for dimensioning a door leaf (1) for a transport vehicle, in particular for the door of a tram, trolley bus, bus, subway or train, said leaf comprising:
- a so-called inner cladding (10), intended to be placed on the inside of the vehicle body, and a so-called outer cladding (20), intended to be placed on the outside of the vehicle body, said claddings delimiting an internal space of said leaf, and a filling core (30, 51 - 56) made of solid material, said core occupying the internal space,
- a frame (70, 72, 74, 76) extending at the periphery of the core,
- means for mounting on the door frame of said door,
**characterized in that** said method comprises the following steps:
providing a filling body (30) made of a first material, referred to as rigid filling material, which is a closed-cell foam, the filling body (30) comprises at least one blind cavity (41 - 46) allowing the reception of a respective acoustic block, said cavity opening only onto the inner front face (31) of said body (30),
- providing at least one block, referred to as an acoustic insulating block (51 - 56), said block being formed from a second material, referred to as acoustic insulating material, said second material having acoustic properties greater than those of said filling material,
providing a largest frontal dimension of each block which is less than 400 millimeters, preferably less than 300 millimeters,
providing a frontal distance (D51) between the opposing faces of two adjacent blocks of greater than 50 millimeters,
providing a frontal distance (d51) between the lateral face of a block (41 - 46) and the edge of said body (30) of greater than 50 millimeters,
- placing each acoustic insulating block such that it is accommodated in a corresponding blind cavity of the filling body extends only over a part of the distance between the claddings (10, 20), on the side of the inner cladding (10) and at a thickness of 10 to 40 mm, and that the ratio (S50/S30) between the total front surface (S50) of the blocks (51 - 56) and the front surface (S30) of said body (30) is between 0.25 and 0.7, preferably between 0.4 and 0.6.

13. Door for a transport vehicle, in particular for a train, tram, subway or even a trolleybus or bus, comprising a door frame secured to the frame of said vehicle, as well as at least one leaf (1) according to any of claims 1 to 11, which is mounted so as to be movable relative to said door frame.

14. Transport vehicle, in particular a train, tram, subway or even a trolleybus or bus, comprising at least one door according to the preceding claim.
